# FASCICULE DE BREVET EUROPEEN

(11) **EP 3 240 744 B1**
(45) Date de publication et mention de la délivrance du brevet: **19.10.2022**
(21) Numéro de dépôt: 14827457.4
(22) Date de dépôt: 30.12.2014
(51) Int. Cl.: B65G 47/256, B65G 47/14

(54) **DISPOSITIF ET MÉTHODE DE FOURNITURE FIABLE D'ÉLÉMENTS DE BOUCHAGE CONFORMES**
VORRICHTUNG UND VERFAHREN ZUR ZUVERLÄSSIGEN AUSGABE VON GEFORMTEN STOPPERELEMENTEN
DEVICE AND METHOD FOR THE RELIABLE DELIVERY OF SHAPED STOPPER ELEMENTS

(43) Date de publication de la demande: 08.11.2017
(73) Titulaire: Sidel Participations, 76930 Octeville-sur-Mer (FR)
(72) Inventeur: ROTH, Emmanuel, F-67455 Mundolsheim Cedex (FR)
(74) Mandataire: Sidel Group
(86) Numéro de dépôt international: PCT/EP2014/079482
(87) Numéro de publication internationale: WO 2016/107656

(56) Documents cités:
- EP-A1- 1 652 801
- EP-A2- 0 599 228
- EP-A2- 2 588 395
- EP-B1- 1 652 801
- EP-B1- 2 588 395
- WO-A1-98/47790
- DE-A1- 10 061 063
- DE-A1-102005 043 230
- DE-A1-102006 055 963
- DE-A1-102008 057 902
- DE-A1-102012 006 150
- US-A- 3 804 240

## Description

La présente invention relève du domaine de la fourniture d'éléments de bouchage pour des conteneurs de liquide, du type bouteille, flacon ou autres, et a pour objet, d'une part, une méthode permettant de convoyer de façon sélective des éléments conformes, et, d'autre part, un dispositif mettant en œuvre cette méthode.

Dans le domaine de l'invention, la fourniture d'éléments de bouchage est nécessaire en amont d'une machine qui a pour fonction essentielle de remplir le conteneur et de le fermer.

La fourniture d'élément de bouchage se fait préférablement avec un premier dispositif de tri comme décrit par exemple dans et comprenant une trémie, dans laquelle une grande quantité d'éléments de bouchage peut être versée en vrac, ainsi qu'un tapis d'élévation, circulant vers le haut depuis la trémie pour y prélever des éléments et les amener au niveau d'une zone de sortie supérieure. Le tapis présente généralement des tasseaux transversaux sur lesquels reposent les éléments de bouchage lors de leur convoyage vers le haut.

Lors de la circulation sur le tapis entre la trémie, zone d'alimentation, et la zone de sortie, les éléments mal orientés sont éjectés, préférablement simplement en les faisant retomber du tapis vers la trémie grâce à la pesanteur, comme cela est par exemple décrit dans US5394972 ou US5586637. Cela permet ainsi généralement d'assurer que les éléments de bouchage délivrés par ce premier dispositif de tri ont tous leur fond du bon côté.

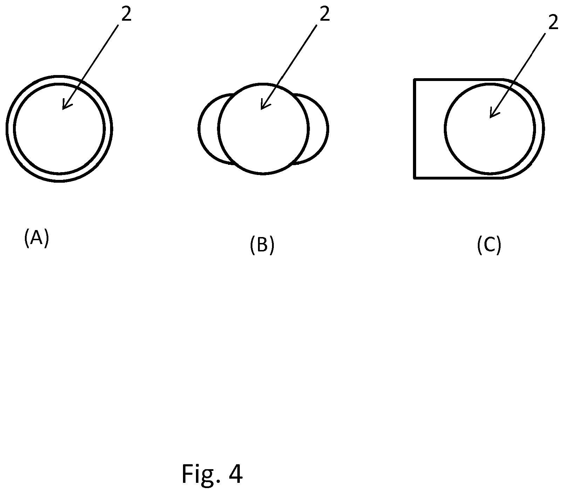

Lorsque les éléments de bouchage sont arrivés en vis-à-vis de la zone de sortie, ils sont dégagés du tapis grâce à un dispositif approprié. En sortie d'un tel premier dispositif de tri, il n'est donc pas possible d'assurer que les éléments de bouchage soient correctement positionnés en rotation autour de l'axe de leur filetage, ou axe de symétrie radiale. Dans certaines applications dont les éléments de bouchage sont de forme plus complexe que de simple cylindres, voir figure 4B et 4C, il est toutefois nécessaire de fournir à la boucheuse des capsules correctement orientées, c'est-à-dire non seulement avec leur fond d'un même côté, mais aussi avec une position angulaire prédéfinie.

En outre, compte tenu de l'intolérance en aval aux défauts de fonctionnement d'un tel premier dispositif de tri, même rares, il reste utile de traiter des éventuels éléments qui seraient encore non conformes à la sortie.

Ainsi, EP2588395 divulgue un dispositif et une méthode selon le préambule des revendications 1 et 8 contenant par exemple une roue trieuse en aval qui dégage des capsules mal positionnées grâce à un principe de doigts escamotables qui peuvent, selon son orientation, accrocher la capsule et la guider ou non. Il est aussi possible d'utiliser une telle roue pour discriminer les capsules en fonction de l'éventuelle absence de collerette. Le convoyage en aval de cette roue se fait avec deux bandes qui entraînent les éléments de bouchage sans les référencer et qui les convoie donc en vrac.

US3874740 présente quant à lui un dispositif permettant de retourner des capsules qui resteraient encore mal orientés. Ce principe ne peut bien évidemment pas être utilisé à partir d'un vrac de capsules, mais uniquement pour traiter des éventuels défauts restants malgré un tri amont. Ce fonctionnement n'est toutefois pas généralisable à tout type d'élément de bouchage et ne peut pas fonctionner à haute cadence. Il n'est en outre utilisable que pour tourner un élément bouchage perpendiculairement à son axe de symétrie.

EP 1 652 801 décrit un principe de tambour rotatif pour le tri des bouteilles. Après avoir été mis en rotation dans le tambour, les produits tombent par un canal sur une courroie primaire. Ils sont ensuite référencés par une roue tournante, puis transportés par une courroie secondaire aval. Les produits ne sont pas référencés plus loin, en aval de la roue.

Il est donc nécessaire de proposer une solution qui permette, et ce même à haute cadence, de détecter, en aval d'un dispositif d'orientation, des éléments de bouchage qui seraient non conformes, en particulier en termes d'orientation, ou qui présenteraient des défauts de fabrication intrinsèques, et de les éliminer. Le besoin d'éliminer un produit non conforme ne devrait cependant pas amener à l'élimination d'un nombre excessif de produits, ce qui peut avoir des impacts évidents sur le rendement global.

En outre, il est avantageux de pouvoir coordonner le débit de la machine utilisant ces éléments de bouchage avec le débit de sortie d'un tel dispositif de fourniture.

Pour ce faire, l'invention propose de convoyer les éléments de bouchage de façon contrôlée à l'unité en maîtrisant la position de chacun d'eux, en aval du moyen de traitement dans lequel il sont au moins référencés, ce qui permet alors notamment, en aval, de connaître le débit avec précision, la position de chaque élément de bouchage, et donc, le cas échéant, d'agir précisément sur eux.

L'invention a ainsi pour objet un dispositif selon le contenu de la revendication 1.

L'invention a aussi pour objet une méthode selon le contenu de la revendication 8.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 est une vue d'ensemble d'une réalisation l'invention ;
- la figure 2 illustre le passage d'un élément de la roue de transfert vers le convoyeur ;
- la figure 3 montre deux sections successives où un passage de sortie peut être aménagé ;
- la figure 4 montre des éléments de bouchage possibles, vus de haut ;
- la figure 5 montre une réalisation possible d'un référencement pour éjection.

L'invention a ainsi tout d'abord pour objet un dispositif de fourniture 1 d'éléments 2 triés, du type capsule, bouchon, ou autres, pour alimenter un poste de travail en aval, ledit dispositif comprenant un moyen d'élévation 3 d'éléments 2 dans lequel s'effectue un premier tri, ainsi que, monté en aval, un moyen de traitement 4 des éléments 2, pour traiter lesdits éléments 2 un par un. Ce dispositif de fourniture 1 a donc pour fonction première d'alimenter un poste de travail, du type remplisseuse boucheuse, en éléments 2 de fermeture, du type capsule, bouchon, ou autres. Ce dispositif de fourniture 1 doit les amener dans une position prédéfinie, et réalise donc une opération de sélection des seuls éléments 2 bien positionnés ou structurellement conformes, ou encore assure lui-même le changement d'orientation des éléments 2 lorsque cela est nécessaire.

Le moyen d'élévation 3 comprend un tapis muni de tasseaux transversaux, sur lesquels les éléments 2 peuvent se positionner. Les éléments 2 mal orientés retombent dans la trémie 17.

Le dispositif de fourniture 1 présente dans la partie supérieure du moyen d'élévation 3, une zone de sortie 15, par laquelle passent les éléments 2 retenus. Ils passent alors par une chute de sortie 6, essentiellement orientée vers le bas, dans laquelle les éléments 2 tombent par gravité. La chute de sortie 6 débouche directement dans la partie supérieure du moyen de traitement 4, qui saisit ensuite chaque élément 2 un par un, avec un débit qui dépend de sa vitesse de fonctionnement. Les éléments 2 sont donc alimentés dans la chute de sortie 6 par le moyen d'élévation 3 et en sont extraits un par un par le moyen de traitement 4. Une accumulation d'éléments 2 est ainsi possible au sein de la chute de sortie 6, ce qui permet d'assurer un approvisionnement constant au moyen de traitement 4 grâce à une régulation adaptée.

Le moyen de traitement 4 traite chaque élément 2, séparément, un à un, alors qu'en amont, ils se trouvent librement en vrac, les uns contre les autres au sein d'une colonne unifilaire s'étendant verticalement au sein de la chute de sortie 6. Le moyen de traitement 4 permet ainsi de réaliser le référencement un à un des éléments 2, leur position étant jusqu'alors inconnue précisément, élément 2 par élément 2. Le moyen de traitement 4 peut assurer une orientation des éléments 2, voire une éjection des éléments 2 non conformes. Le moyen de traitement 4 permet au moins de saisir chaque élément 2 séparément et de les fournir au convoyeur 5 juste après, ce qui permet d'avoir un moyen de traitement 4 dont la conception évite les coincements, alors que le convoyeur 5 est de conception dédiée au déplacement des éléments 2. Etant situé en bas d'une chute de sortie 15, le moyen de traitement 4 est aisément accessible pour une intervention en cas de problème. Préférablement, la zone de sortie 15 est aussi à une hauteur accessible à un opérateur au sol.

Selon l'invention, le dispositif de fourniture 1 comprend un convoyeur 5, monté en aval du moyen de traitement 4 pour diriger les éléments 2 vers le poste de travail, ledit convoyeur 5 déplaçant les éléments 2 référencés à l'unité, de sorte à pouvoir connaître la position de chaque d'eux séparément, voire d'agir séparément sur chacun d'eux. La position du convoyeur 5 est connue en permanence, ce qui permet de connaître par conséquent la position de chaque élément 2 à tout instant, puisque le convoyeur 5 manipule séparément chaque élément 2 sans glissement. Au sein de la chute montante 7 où évolue le convoyeur 5, les éléments 2 sont donc référencés un par un, et, à l'inverse de la chute de sortie 6, la position de chaque élément 2 est donc connue et maîtrisée.

Préférablement, le convoyeur 5 prend la forme d'une bande sans fin munie de butées 16 d'entraînement des éléments 2, chaque butée 16 étant destinée à entraîner un seul élément 2. La position du convoyeur 5 est préférentiellement connue précisément à chaque instant, de sorte à pouvoir connaître avec précision la position d'un élément 2 qui aurait été pris en charge. Cela peut par exemple être obtenu par le recours à un moteur d'entraînement du convoyeur 5 dont la position angulaire est connue précisément à chaque instant.

Le convoyeur 5 présente donc l'avantage d'agir mécaniquement séparément sur chaque élément 2 par un principe de butée, chaque élément 2 étant véhiculé sans glissement au niveau d'un logement adapté, connaître la position du convoyeur 5 permettant de connaître immédiatement la position longitudinale et le déplacement de chaque élément 2 pris en charge.

En outre, la position des éléments 2 au sein du moyen de traitement 4 est éventuellement aussi connue grâce à un retour d'information quant à la position exacte du moyen de traitement 4, qui, comme il sera décrit plus loin, peut prendre la forme d'une roue 11 d'entraînement dont la position angulaire est connue en permanence.

Ainsi, selon l'invention, le dispositif de fourniture 1 comprend une chute de sortie 6, entre la sortie du moyen d'élévation 3 et le moyen de traitement 4, dans laquelle les éléments 2 tombent par gravité et peuvent s'accumuler en vrac, préférablement en une seule colonne.

Selon une autre caractéristique additionnelle possible, le dispositif de fourniture 1 comprend, en outre, une chute montante 7, disposée après le moyen de traitement 4, et dans laquelle circule le convoyeur 5. Les éléments 2 effectuent, dans la chute montante 7, sous l'action du convoyeur 5 sur chaque élément 2 séparément, le mouvement inverse à celui qu'ils subissent au préalable dans la chute de sortie 6, où ils se déplacent sans contrôle vers le bas jusque sur le moyen de traitement 4 unitaire.

Les éléments 2 sont guidés dans la chute de sortie 6 ainsi que dans la chute montante 7 grâce à une forme de canal creux plus ou moins évidé dans lequel ils peuvent circuler.

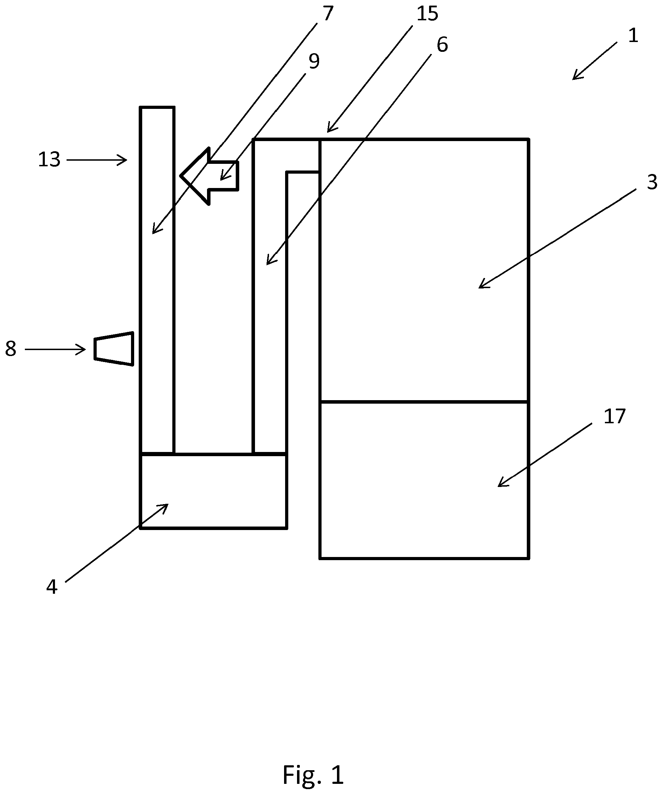

Comme le montre la figure 1, le dispositif de fourniture 1 présente ainsi une architecture où le moyen de traitement 4 se trouve dans la partie basse d'un chemin de convoyage en forme de U. L'essentiel de la chute de sortie 6 ainsi que de la chute montante 7 est aussi accessible pour un opérateur.

Dans des modes de réalisation particuliers, le moyen de traitement 4 saisit chaque élément 2 séparément pour les amener au convoyeur 5, et assure éventuellement, en outre, une fonction d'orientation des éléments 2 mal orientés, voire d'éjection des éléments 2 non conformes. Le moyen de traitement 4 agit mécaniquement sur chaque élément 2 séparément pour le déplacer de façon référencée. Le moyen de traitement 4 saisit donc l'un après l'autre les éléments 2, en agissant donc à chaque fois sur l'élément 2 le plus en bas dans la colonne qu'ils forment au-dessus du moyen de traitement 4. Cette manœuvre permet au moins de référencer chaque élément 2. Il peut aussi être utile de réaliser un changement d'orientation de l'élément 2 au cours de son déplacement sous l'effet du moyen de traitement 4 de la chute de sortie 6 à la chute montante 7. Un tel changement d'orientation est ainsi complémentaire à la sélection qui peut s'effectuer dans le moyen d'élévation 3, puisqu'il permet de modifier l'orientation selon un critère auquel n'est pas sensible le moyen d'élévation 3.

Le dispositif de fourniture 1 présente donc la succession d'une chute de sortie 6, dans laquelle les éléments 2 évoluent librement, d'un moyen de traitement 4 au sein duquel ils sont au moins manipulés et déplacés séparément chacun, puis d'un convoyeur 5 déplaçant chaque élément 2 séparément et évoluant vers le haut au sein d'une chute montante 7.

Selon une caractéristique additionnelle, le dispositif de fourniture 1 comprend en outre, d'une part, un moyen d'analyse visuelle 8 pour contrôler l'aspect des éléments 2 alors qu'ils sont transportés par le convoyeur 5 en aval du moyen de traitement 4, et, d'autre part, au moins un moyen d'éjection 9, agissant en aval du moyen d'analyse visuelle 8, pour dégager les éléments 2 détectés comme étant non conformes sur la base de l'analyse visuelle. Cette analyse visuelle vérifie donc la conformité finale des éléments 2 apportés au poste de travail aval par le dispositif de fourniture 1, en termes de position, d'orientation, et/ou de caractéristiques intrinsèques.

Le moyen d'éjection 9 agit préférablement alors que les éléments sont transportés sans possibilité de déplacement relatif par le convoyeur 5, puisqu'ils y sont référencés chacun séparément et déplacés de façon contrôlée. Il est ainsi possible de savoir exactement où se trouve plus tard un élément 2 détecté antérieurement par le moyen d'analyse visuelle 8 comme non satisfaisant et sur lequel le moyen d'éjection 9 doit agir.

Dans des modes de réalisation préférés, le moyen d'éjection 9 prend la forme d'une butée guide modifiant le trajet de l'élément 2 ou entraînant l'élément 2, ou encore d'une buse à jet d'air comprimé, ou encore d'une forme de poussoir.

Selon une autre caractéristique additionnelle possible, le dispositif de fourniture 1 comprend, en outre, une unité de contrôle, recevant le signal du moyen d'analyse visuelle 9 ainsi qu'un signal représentant l'avancement du convoyeur 5, et pilotant la manœuvre du au moins un moyen d'éjection 9, de sorte à mettre en œuvre le moyen d'éjection 9 en cas de détection d'un défaut au niveau du moyen d'analyse visuelle 8, et ce de façon synchronisée avec le mouvement du convoyeur 5 pour dégager par erreur dudit convoyeur 5 le moins d'éléments 2 satisfaisants possibles.

Dans des réalisations avantageuses, le moyen de traitement 4 comprend une roue de transfert 11 motrice, entraînant un à un les éléments 2 à sa périphérie, ou niveau d'ouvertures 18. La chute de sortie 6 débouche donc par sa zone inférieure au niveau de la périphérie de la roue de transfert 11, du côté où son mouvement va vers le bas, c'est-à-dire dans la même direction que les éléments 2 dans la chute des sortie 6. Le convoyeur 5 et le moyen de traitement 4 peuvent éventuellement être formés d'un seul et même moyen d'entraînement. Dans les modes de réalisation illustrés, le moyen de traitement 4 entraîne le mouvement des éléments 2 et est donc moteur. Il convient en effet de remarquer qu'il pourrait être néfaste de devoir aménager une colonne d'éléments 2 dans la chute de sortie 6 suffisamment haute pour que la pression obtenue suffise à déplacer le moyen de traitement 4, et, partant, les autres éléments 2 qu'il contient. Le moyen de traitement 4 sous forme de roue de transfert 11 motorisée assure ainsi le déplacement contrôlé des éléments 2 depuis la chute de sortie 6 jusqu'à la chute montante 7. Sa vitesse conditionne donc la vitesse à laquelle les éléments 2 sont prélevés de la chute de sortie 6. Bien entendu, la vitesse de la roue de transfert 11 est coordonnée avec celle du convoyeur 5 pour que le même temps s'écoule entre deux éléments 2 déplacés par le convoyeur 5 et deux éléments 2 déplacés par la roue de transfert 11. Cela évite les collisions et les casses de pièce.

Ainsi, préférablement, le convoyeur 5 et la roue de transfert 11 travaillent de façon synchronisée pour permettre à chaque élément 2 séparément de passer de la roue de transfert 11 au convoyeur 5. Comme illustré plus loin, la roue de transfert 11 présente des ouvertures 18 périphériques dédiées chacune à la réception d'un élément 2, le convoyeur 5 présentant notamment des doigts 16 supports successifs, dédié chacun à un seul élément 2 et formant un moyen de référencement à l'unité du moyen de traitement 4. La roue de transfert 11 et le convoyeur 5 sont alors synchronisés de sorte qu'un élément 2 passe à chaque fois d'une ouverture 18 à un doigt 16, sans risque de collision entre le convoyeur 5 et la roue de transfert 11.

Le moyen d'analyse visuelle 8 permet d'effectuer un test basé sur la géométrie observée pour les éléments 2. En cas de non-conformité en sortie du moyen de traitement 4, qui, en complément du moyen d'élévation 3, peut assurer une fonction de convoyage sélectif à l'unité, il est donc nécessaire de prévoir une éjection des éléments 2 non conformes.

Le moyen d'éjection 9 se trouve donc au niveau du passage 14 de sortie et agit sur les éléments 2 à extraire pour les pousser dans ce passage 14. Le recours à un tel passage 14, qui forme une partie non guidée dans le tronçon 13 nécessite bien entendu d'éviter que des éléments 2 conformes ne puissent y circuler, et il est donc nécessaire de prévoir un moyen de référencement, assurant que les éléments 2 ne vont pas naturellement aller vers ce passage 14, mais qu'une force contrôlée est mise en œuvre pour éjecter de façon volontaire des éléments 2 identifiés.

Ainsi, selon une caractéristique additionnelle possible, le dispositif de fourniture 1 comprend un moyen de référencement assurant le placement des éléments 2 contre une surface de référence 12 pendant leur convoyage par le convoyeur 5 au sein d'un tronçon 13 prédéfini du dispositif de fourniture 1, ledit tronçon 13 présentant une partie ouverte sans guidage formant passage 14 en vis-à-vis de la surface de référence 12, le moyen d'éjection 9 agissant de sorte à diriger les éléments 2 vers cette partie ouverte pour les dégager du convoyeur 5.

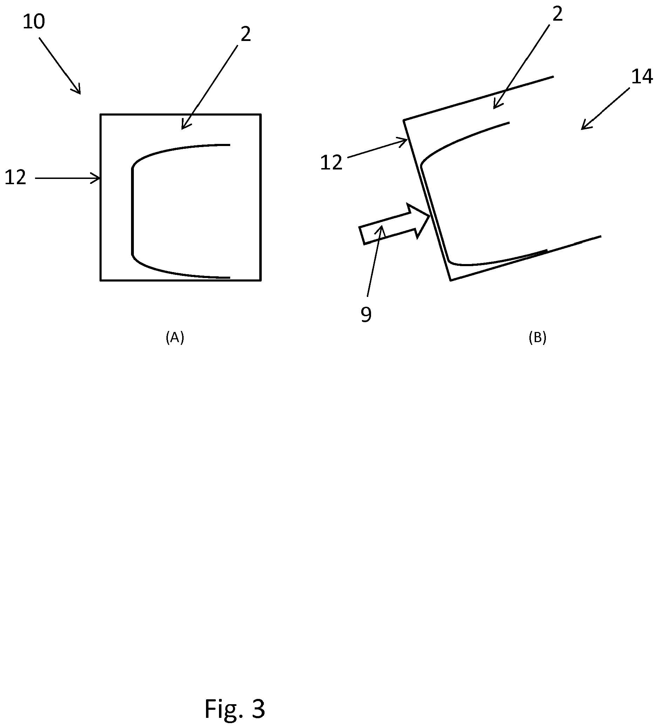

Dans certaines réalisations possibles, le moyen de référencement consiste essentiellement en un canal 10 de guidage des éléments 2 qui est vrillé de sorte à assurer que, sous l'effet de la pesanteur, chaque élément 2 vient se plaquer et circuler contre un fond dudit canal 10 qui forme alors la surface de référence 12. On utilise donc ici la répartition des masses de l'élément 2 pour réaliser le référencement, voir figure 3. L'axe autour duquel le canal est vrillé a donc une composante horizontale.

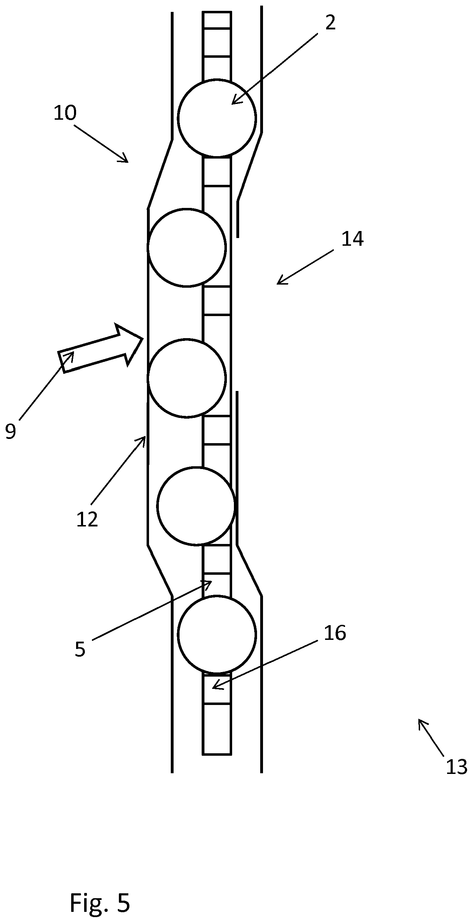

Dans d'autres réalisations, voir figure 5, le moyen de référencement consiste essentiellement en un canal 10 de guidage des éléments 2 qui est désaxé par rapport à la direction du convoyeur 5, de sorte que le convoyeur 5 exerce sur l'élément 2 une force qui ne passe pas par son centre de gravité et qui a ainsi pour effet de le pousser latéralement vers une des surfaces latérales dudit canal 10 qui forme alors la surface de référence 12. Le canal 10, avantageusement à peu près vertical, vient donc pousser l'élément 2 pour que l'action du doigt 16 du convoyeur 5 ne passe plus par son centre de gravité, l'action du convoyeur 5 créant un couple amenant l'élément 2 contre l'une des surfaces de guidage du canal 10, ce qui rend alors possible la suppression de la surface opposée.

Le au moins un moyen d'éjection 9 du dispositif de fourniture 1 comprend forme alors éventuellement un guidage escamotable de façon contrôlée qui aura pour effet de guider les éléments 2 vers le passage 14 de sortie, sous l'effet de l'entraînement du convoyeur 5. Il est aussi envisageable de recourir à un souffle d'air ou encore à un poussoir qui se déplace pour que son mouvement entraîne l'élément 2 à amener dans le passage 14.

L'invention a aussi pour objet un procédé de fourniture d'éléments 2 de bouchage d'un contenant pour liquide du type bouteille ou autres, pour alimenter un poste de travail en aval, comprenant une succession d'étapes consistant essentiellement à

Effectuer une première sélection d'éléments 2 au sein d'un moyen d'élévation 3,

Amener les éléments 2 en colonne unifilaire vers un moyen de traitement 4,

Traiter les éléments 2 à l'unité au sein du moyen de traitement 4, notamment de sorte à les référencer en position, les orienter, et/ou éjecter unitairement les éléments 2 non conformes. Ce procédé est mis en œuvre par un dispositif de fourniture 1 tel que décrit ci-dessus. Dans l'absolu, il est envisageable que les éléments 2 soient amenés vers le moyen de traitement 4 de façon référencée à l'unité par un moyen adéquat. Préférablement, amener les éléments 2 en colonne unifilaire se fait en laissant agir la pesanteur, les éléments 2 circulant au sein d'une chute de sortie 6 aboutissant sur un moyen de traitement 4 des éléments 2 à l'unité, et au sein de laquelle ils s'accumulent.

Selon l'invention, ce procédé comprend, en outre, suite au traitement à l'unité, une étape de convoyage de sortie vers le poste de travail en aval, au cours de laquelle chaque élément 2 est entraîné séparément. Il est ainsi possible de réaliser des opérations ciblées sur chaque élément 2 sortant du dispositif de fourniture 1 et ayant donc subi les opérations ci-dessus. En outre, il est possible de coordonner le débit de sortie du dispositif de fourniture 1 avec le débit de fonctionnement de la machine à alimenter. Bien entendu, au cours de ce convoyage de sortie, ainsi qu'au cours du traitement à l'unité, plusieurs éléments 2 peuvent être manipulés simultanément, ce qui signifie que l'opération sur un élément 2 peut commencer avant la fin de l'opération sur le précédent.

Selon une caractéristique additionnelle possible, le procédé comprend, en outre

Effectuer un contrôle d'aspect de chaque élément 2 au cours du convoyage de sortie, en particulier grâce à une caméra fixe dans le champ de vision de laquelle les éléments 2 viennent à circuler, et

Dégager automatiquement les éléments 2 qui sont détectés comme non conformes sur la base du contrôle d'aspect.

Dégager les éléments 2 détectés non conformes dans la chute montante 7 se fait notamment, d'une part, en assurant la position de l'élément 2 contre une surface de référence 12 au sein d'un tronçon 13 présentant un passage 14, et, d'autre part, en dirigeant les éléments 2 vers ledit passage 14, notamment sous l'effet d'une butée de guidage, d'un flux d'air, ou autre action mécanique.

Dans des modes de réalisations particuliers, effectuer un contrôle d'aspect comprend vérifier la position de l'élément 2 de sorte à pouvoir détecter une mauvaise orientation, et/ou vérifier ses dimensions, de sorte à pouvoir détecter l'absence d'une collerette, par exemple, et/ou vérifier que l'élément 2 est complet, de sorte à pouvoir détecter des manques de matière au sein de l'élément 2, par exemple.

Enfin, selon une autre caractéristique, traiter les éléments 2 à l'unité consiste essentiellement à les saisir chacun séparément depuis la chute de sortie 6 pour les amener dans la chute montante 7, et/ou à en modifier l'orientation, et/ou à dégager les éléments 2 non conformes. Cela permet donc au moins d'assurer un premier référencement à l'unité des éléments 2, puis une fourniture au convoyeur 5.

L'invention va maintenant être expliquée en référence avec les modes de réalisation illustrés.

La figure 1 illustre en particulier un dispositif de fourniture 1 présentant une trémie 17 en zone basse, dans laquelle des éléments 2 de bouchage, type capsule ou autre, peuvent être déversés en vrac.

Les éléments 2 sont ensuite entraînés par un tapis animé d'un mouvement essentiellement vertical, jusqu'à une hauteur prédéfinie. C'est au cours de ce convoyage essentiellement vertical qu'une première sélection est effectuée. Les éléments 2 de bouchage ont en effet un fond en vis-à-vis duquel se trouve une ouverture, de sorte qu'ils ont une section en forme de U pour épouser la forme du goulot sur lequel ils sont apposés. La différence de poids entre la partie ouverte et la partie fermée est utilisée pour effectuer le tri lors du convoyage vertical, plus précisément en laissant tomber les éléments 2 dont le fond fermé n'est pas contre le tapis.

Le tapis amène les éléments 2 de bouchage jusqu'à une zone de sortie 15, en partie supérieure. Les éléments 2 sont destinés ensuite à être fournis à un équipement de remplissage, dont l'entrée se trouve à une certaine hauteur. Dans le but de réduire l'énergie consommée pour le convoyage de ces éléments 2, il est envisageable d'utiliser la pesanteur et de laisser ainsi les éléments 2 tomber, au sein d'une goulotte adaptée depuis la zone de sortie jusqu'à l'entrée de la machine en aval. Cela présente l'inconvénient de conduire à des équipements parfois très hauts, qui sont alors difficiles à transporter du site de fabrication du dispositif au site d'exploitation. En outre, la goulotte entre la zone de sortie et la zone d'alimentation de la machine en aval se trouve alors en hauteur, et toute intervention au niveau de cette goulotte est alors compliquée.

A titre d'exemple, un dispositif de fourniture 1 classique, bien que devant fournir des éléments 2 correctement orientés, doit bien entendu préférablement être muni d'un moyen de contrôle de l'orientation réelle des éléments 2 qu'il fournit à la machine en aval, et ce pour éviter qu'un défaut dans l'opération de tri et/ou d'orientation, même très peu probable, ne génère un problème majeur au niveau de la machine en aval. Ce genre d'appareil de détection se place alors dans la goulotte, et se trouve alors à une hauteur difficile d'accès. L'intervention suite à un dysfonctionnement dans cette zone est alors très peu ergonomique, nécessitant d'intervenir avec des échelles, etc.

Dans le mode de réalisation illustré à la figure 1, les éléments 2, une fois passés par la zone de sortie 15, circulent alors dans une chute qui permet à la gravité d'entraîner les éléments 2. La chute de sortie 6 s'étend essentiellement verticalement, à côté du tapis. Les éléments 2 y circulent librement vers le bas sous l'effet de la pesanteur.

Il convient ici de noter que le flux d'éléments 2 qui passent par la zone de sortie 15 en bout de tapis est discontinu. Il est donc avantageux d'aménager, dans le bas de la chute de sortie 6, une zone pour accumuler les éléments 2, de sorte qu'un flux continu d'éléments 2 peut être organisé en aval de cette zone.

Après cette chute de sortie 6, le dispositif de fourniture 1 présente avantageusement une roue de transfert 11. La roue de transfert 11 permet d'assurer une mise au pas des éléments 2 qui, en amont, reposent au contact les uns des autres dans la chute de sortie 6. En effet, cette roue de transfert 11 présente des ouvertures 18 périphériques dans lesquelles les éléments 2 successifs peuvent venir se loger de sorte à être entraînés par ladite roue de transfert 11. La répartition régulière des ouvertures 18 le long de la périphérie de la roue de transfert 11 garantit ainsi que, en sortie de roue de transfert 11, les éléments 2 sont espacés de façon régulière les uns des autres. Une telle roue de transfert 11 permet non seulement d'écarter les éléments 2 d'une façon prédéfinie mais aussi de référencer les éléments 2 successifs, de sorte que leur position est alors connue précisément, à partir de l'information de la position angulaire de la roue de transfert 11.

La roue de transfert 11 peut à cet effet être entraînée par un moteur synchrone. Une transmission par courroie crantée permet alors de synchroniser le convoyeur 5 et la roue 11, pour éviter alors des décalages et collisions entre ces deux éléments, notamment au niveau de doigts 16 d'entraînement du convoyeur 5 et des excroissances complémentaires aux ouvertures 18.

Avantageusement, la vitesse de rotation de la roue de transfert 11, qui consomme les éléments 2 tombant dans la chute de sortie 6 et/ou la vitesse d'avance du tapis sont régulés de sorte à garantir une accumulation d'éléments 2 au-dessus de la zone de prise de la roue de transfert 11. Cela limite les problèmes de coincements qui peuvent apparaître si un élément 2 tombe sur la roue de transfert 11 déjà en mouvement. La roue de transfert 11 présente en effet des extensions périphériques complémentaires à deux ouvertures 18 successives, qui peuvent éventuellement bloquer un élément 2 arrivant tardivement par rapport au mouvement de la roue de transfert 11. Une solution de régulation basée sur un détecteur de niveau de la colonne d'éléments 2 arrivant sur la roue de transfert 11 est envisageable, comme proposé dans WO2012001251.

Comme il a été souligné, il est avantageux, pour des questions d'accès, d'éviter une connexion trop en hauteur entre la zone de sortie 15 et la machine en aval, de sorte qu'il n'est pas possible de compter sur la gravité pour amener les éléments 2 à la machine en aval. La roue de transfert 11 peut dans ces cas être motorisée et former un moyen moteur pour la colonne d'élément 2.

Cette roue de transfert 11 peut aussi assurer une fonction d'orientation et/ou de sélection des éléments 2. En effet, dans certains cas particuliers, les éléments 2 sont de forme symétrique autour d'un axe de rotation, comme pour des bouchons cylindriques. Dans certains autres cas, voir figure 4, les éléments 2 peuvent être plus élaborés et avoir alors une forme non symétrique autour d'un axe de rotation, par exemple avec une base rectangulaire ou avec des extensions périphériques. Il est possible de prévoir que la roue de transfert 11 assure alors une fonction de positionnement des éléments 2 selon un certain angle autour de leur axe de symétrie correspondant au goulot. La roue de transfert 11 peut aussi servir à sélectionner certains éléments 2, sur la base d'une mauvaise orientation ou d'un défaut structurel. WO2012001251 propose par exemple de ne convoyer les éléments 2 sous forme de bouchons que dans le cas où leur fond se trouve effectivement du côté attendu, voire aussi que leur bague inférieure ou collerette est bien présente.

On notera que la roue de transfert 11 est située en bas de la chute de sortie 6, à une hauteur qui en facilite l'accès, par un opérateur. Un défaut dans l'exécution d'une de ses fonctions ci-dessus peut donc être rapidement et facilement traité par un opérateur sans utiliser de matériel de levage, échelle ou autres.

La roue de transfert 11 coopère ainsi directement avec les éléments 2, un par un, pour assurer les fonctions décrites ci-dessus, en aval du tapis, après une portion dans laquelle ils se déplacent sans contrôle sous l'effet de la gravité dans une chute de sortie 6, au sein de laquelle ils s'accumulent avant d'être entraînés par la roue de transfert 11. Une ouverture 18 de la roue de transfert 11 est destinée à recevoir un élément 2 à chaque fois et est de dimensions adaptées.

La roue de transfert 11, qui forme un moyen de référencement et/ou de convoyage et/ou d'orientation et/ou de sélection et/ou d'entraînement à l'unité, est donc en aval d'un convoyage unifilaire d'éléments 2. En aval de la roue de transfert 11, il est nécessaire d'aménager un moyen d'élévation, en particulier dans les cas où l'énergie motrice de la roue est insuffisante. Le dispositif de fourniture 1 est ainsi pourvu d'un convoyeur 5 qui peut réaliser l'élévation verticale de chaque élément 2 séparément, et ce jusqu'à une hauteur prédéfinie.

Dans le cas particulier illustré, ce convoyeur 5 prend la forme d'une bande ou courroie sans fin, dont l'un des tronçons assure l'élévation verticale des éléments 2. Des logements successifs sont prévus pour chaque élément 2 à entraîner. Ils sont réalisés sous la forme de doigts 16 successifs de long de la bande. Un élément 2 peut alors simplement reposer sur un doigt 16. Bien entendu, le convoyeur 5 entraîne alors les éléments 2 dans un canal aux dimensions adaptées dans les autres directions. L'élément 2 repose donc en permanence sur un doigt 16 et contre les parois internes d'un canal de guidage.

Le convoyeur 5 circule donc dans une chute montante 7, qui permet d'amener les éléments 2 à la hauteur souhaitée. Le trajet des éléments 2 présente donc une forme en U, dont une branche serait formée par la chute de sortie 6, en amont, et l'autre branche formée par la chute montante 7, en aval.

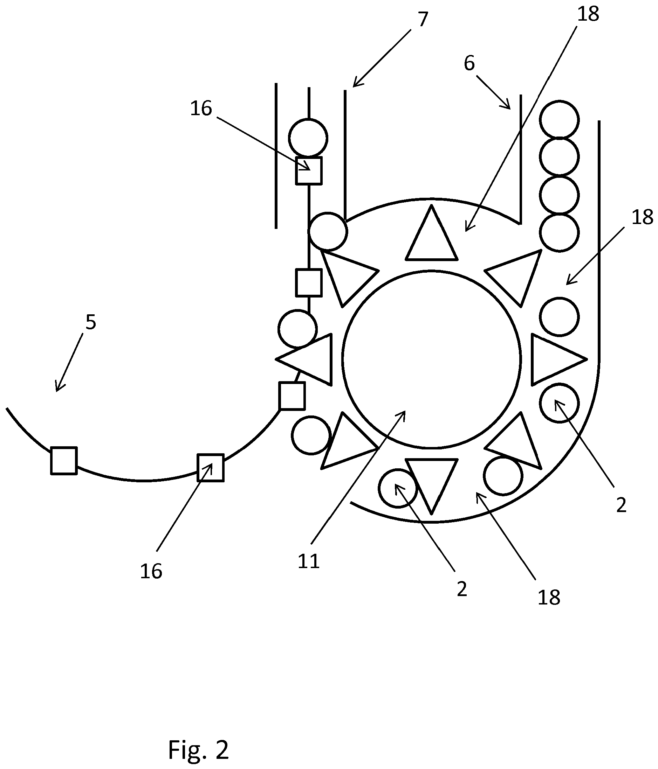

Comme le montre la figure 2, la courroie du convoyeur 5 est montée sur un axe de renvoi en partie inférieure, le brin vertical actif de la courroie se trouvant à peu près entre, d'une part, l'axe de renvoi, et, d'autre part, la roue de transfert 11. La roue de transfert 11 et l'axe de renvoi tournent donc dans ce cas en sens inverse l'un par rapport à l'autre, telles deux roues en engrènement. Le dispositif de fourniture 1 présente donc la succession, à partir du tapis, de la chute de sortie 6, puis la chute montante 7 du convoyeur 5, puis le retour du convoyeur 5. Dans l'absolu, le retour du convoyeur 5 pourrait se trouver du même côté que la chute de sortie 6 par rapport à la chute montante 7, ce qui nécessiterait alors que la roue de transfert 11 et l'axe de renvoi tournent dans le même sens.

On obtient ainsi une architecture globale où le dispositif de fourniture 1 se présente sous la forme d'une première portion dans laquelle un tapis d'élévation verticale assure une première sélection jusqu'à une zone de sortie 15, puis une deuxième portion dans laquelle les éléments sont référencés et convoyés de façon unitaire avec un cheminement en forme de U vertical, une roue de transfert 11 se trouvant dans le bas dudit U. Le dispositif de fourniture 1, hormis éventuellement la chute montante 7 dans certaines applications, peut donc être de hauteur réduite, c'est-à-dire essentiellement celle nécessaire au tapis pour réaliser sa fonction de sélection, le fait d'atteindre la hauteur de l'entrée de la machine suivante étant assuré uniquement par le convoyeur 5. Le transport d'un tel dispositif est largement simplifié, et il peut, en outre, ne pas être démonté entre la production et la mise en service pour des raisons de transport.

La deuxième portion se trouve préférablement à côté de la première notamment protégée dans un carénage dont ne sort éventuellement qu'une partie de guidage des éléments 2 autour du convoyeur 5, après référencement et contrôle final, comme il va être décrit plus loin.

Il convient de noter que la position du convoyeur 5 est contrôlée en permanence, préférablement grâce à un élément d'entraînement du type moteur brushless, dont la position angulaire est connue à chaque instant. Ce contrôle de position permet, grâce au référencement des éléments 2 sur le convoyeur 5, de connaître à tout moment la position de chaque élément 2 lorsqu'il est pris en charge par le convoyeur 5. De façon analogue, la position angulaire de la roue de transfert 11 est préférablement connue en permanence, ce qui permet aussi de connaître à tout moment la position des éléments 2 référencés sur elle. Le mouvement de la roue de transfert 11 et du convoyeur 5 étant coordonnées, il est possible de connaître avec précision la position de l'élément 2, sur le convoyeur 5, après qu'il ait quitté la roue de transfert 11. La coordination des mouvements du convoyeur 5 et de la roue de transfert 11 peut se faire de façon électronique, avec une unité de contrôle qui asservit l'un et/ou l'autre, ou mécanique, avec un montage des deux sur un seul et même entraînement en rotation, par exemple par arbres engrenés, par exemple.

Le convoyeur 5 forme préférablement la dernière portion du dispositif de fourniture 1, et peut aussi, par exemple, s'étendre jusque dans la machine en aval, telle que boucheuse, remplisseuse ou autres. Le convoyeur 5 peut former le moyen de déplacement des éléments 2 dans ladite machine, pour au moins sa portion initiale, voire pour toute la machine. Il est possible de synchroniser le mouvement du convoyeur 5 avec le fonctionnement de la machine en aval, par exemple.

Comme il a déjà été souligné, le déplacement du convoyeur 5 est synchronisé avec celui de la roue de transfert 11, pour qu'un élément 2 puisse passer d'une ouverture 18 dans laquelle il se trouve au niveau de la roue de transfert 11 à l'espace entre deux doigts 16 successifs au niveau du convoyeur 5. Le passage d'un élément 2 de la roue de transfert 11 au convoyeur 5 se fait de la façon décrite.

Comme le montre la figure 2, la roue de transfert 11 présente des ouvertures 18 périphériques destinées à contenir, chacune, un élément 2. La roue de transfert 11 est néanmoins préférablement moins épaisse que les éléments 2. Les ouvertures 18 se succèdent à la périphérie de la roue de transfert 11 de sorte à maintenir un certain espacement entre les éléments 2. Les éléments 2 successifs sont poussés par les dents complémentaires aux ouvertures 18 successives, au sein d'un canal circulaire de forme adaptée aux éléments 2. Afin de dégager les éléments 2 de la roue de transfert 11, le dispositif de convoyage 1 présente à cet endroit une butée sélective qui empêche lesdits éléments 2 de continuer leur parcours avec la roue de transfert 11. La forme des dents est bien sûr adaptée pour éviter de coincer les éléments 2. Le dispositif de fourniture 1 présente donc, tout d'abord, un canal de convoyage pour recevoir tant la roue de transfert 11 que les éléments 2, puis, d'une part, un canal restreint dans lequel seule la roue de transfert 11 peut continuer, et, d'autre part, un canal adapté aux éléments 2 dans lequel ils peuvent continuer leur progression dans la chute montante 7.

Le convoyeur 5 et la roue de transfert 11 tournent dans des sens opposés, et les doigts 16 s'approchent donc progressivement de la roue de transfert 11 au niveau de leur jonction. Un doigt 16 arrive donc approximativement après la dent qui entraîne un élément 2. Lorsque l'élément 2 arrive au niveau de la zone de butée sélective que seule la roue de transfert 11 peut traverser, l'élément 2 est décalé et dégagé de sa dent pour venir alors simplement tomber d'une chute extrêmement courte sur le doigt 16 juste dessous. Il est alors pris par ce doigt 16 et peut continuer son déplacement sous l'action du convoyeur 5, et libérer une ouverture 18, qui pourra servir à accueillir un autre élément 2, voir figure 2.

Comme le montre la figure 1, le dispositif de fourniture 1 présente un moyen d'analyse visuelle 8 positionné en aval de la roue de transfert 11. Comme il a été dit, la roue de transfert 11 peut assurer une fonction de bon positionnement ou de sélection des éléments 2 sur un critère d'orientation et/ou de forme. Il est donc utile de pouvoir vérifier l'exécution notamment de cette fonction.

Le moyen d'analyse visuelle 8 consiste alors essentiellement en une caméra dont le temps de traitement est compatible avec le débit d'éléments 2 souhaité. En effet, il doit être capable d'effectuer une analyse visuelle de chaque élément 2 en particulier, puisque les éléments 2 qui arrivent dans son champ de vision sont, à ce moment-là, convoyés référencés à l'unité et espacés les uns des autres.

Le moyen d'analyse visuelle 8 peut ainsi servir à détecter la position exacte de chaque élément 2, mais aussi, éventuellement, sa non intégrité par manque de matière par exemple.

Il convient ici de noter que les éléments 2 peuvent en particulier être des bouchons ou capsules qui ont alors une forme complémentaire à un goulot cylindrique. L'élément 2 présente alors une symétrie au moins locale autour d'un axe de symétrie, qui correspond généralement à l'axe du filetage servant à fixer l'élément 2 sur le contenant. La roue de transfert 11 et alors préférablement telle que les éléments 2 sont déplacés avec leur axe de symétrie parallèle à l'axe de rotation de la roue de transfert 11. Par conséquent, les doigts 16 de support et d'entraînement par le convoyeur 5 sont alors aussi préférablement parallèles à l'élément 2. L'axe d'observation du moyen d'analyse visuelle 8 est alors aussi parallèle à l'axe de symétrie des éléments 2. Le guidage dans la chute montante 7 prévoit alors une zone de circulation des doigts 16 qui prend la forme d'une fente plane définie à la fois par l'axe de symétrie des éléments 2 et la direction de déplacement du convoyeur 5 à cet endroit.

Grâce à cette orientation, il est possible au moyen d'analyse visuelle 8 de détecter une mauvaise position angulaire d'un élément 2 autour de son axe de symétrie. Il est aussi possible de détecter, par exemple des manques matière, comme au niveau du fond d'un élément 2 sous forme de bouchon.

Bien entendu, il est aussi envisageable d'aménager une portion de guidage autour du convoyeur 5 qui est vrillée autour de la direction de déplacement, pour amener les éléments 2 dans une autre orientation. Par exemple, en aménageant une telle portion vrillée d'un angle droit, la direction d'observation du moyen de d'analyse visuelle 8 et l'axe de symétrie des éléments 2 deviennent perpendiculaires et il est alors possible de détecter des éléments 2 dont l'épaisseur ne convient pas, dénotant ainsi d'une absence de bague inférieure, par exemple, etc. Il est bien entendu aussi possible d'aménager un moyen d'analyse visuelle 8 qui soit capable, grâce par exemple à deux caméras perpendiculaires, de détecter séparément les deux.

Le moyen d'analyse visuelle 8 effectue donc une observation des contours de l'élément 2 par vision. Les données générées sont traitées par une unité de contrôle, qui pourra, comme décrit ci-dessous, mettre en œuvre de façon ciblée un moyen d'éjection 9 placé en aval.

Ainsi, l'unité de contrôle effectue un test pour chaque élément 2 et identifie son éventuelle non-conformité. Comme la position exacte de chaque élément 2 est connue, grâce au fait que le convoyeur 5 convoie les éléments 2 un par un, il est possible de connaître avec précision à chaque moment la position de cet élément défectueux. Il suffit alors d'aménager un moyen d'éjection 9 à un endroit défini, et de le mettre en œuvre dès lors qu'un élément 2, détecté comme non conforme, passe dans son champ d'action. Cela permet alors de limiter de façon significative les éjections d'élément 2 satisfaisants par manque de précision, uniquement car ils se trouvent à proximité d'un élément 2 non conforme.

Comme le moyen d'analyse visuelle 8 peut identifier la raison de la non-conformité, il est possible d'éjecter l'élément 2 non conforme en fonction du défaut qu'il présente. Ainsi, on peut envisager une pluralité de moyens d'éjection 9: un moyen d'éjection 9 qui renvoie en amont les éléments 2 intrinsèquement satisfaisants mais simplement mal positionnés et un autre moyen d'éjection 9 qui éjecte définitivement les éléments 2 qui sont intrinsèquement non conformes.

Une façon efficace de réaliser un moyen d'éjection 9 est de prévoir d'ouvrir localement le guidage des éléments 2, en référençant au préalable les éléments 2 à l'opposé, puis d'agir sur les éléments 2 à dégager de sorte à les attirer à travers la zone où le guidage est supprimé. La suppression d'au moins une surface de guidage est nécessaire pour pouvoir sortir du canal de guidage les éléments 2 non conformes. Il est alors nécessaire d'éviter que les éléments 2 satisfaisants quittent le circuit au niveau de cette ouverture, et donc d'assurer que seule une action mécanique contrôlée amène les éléments 2 dans cette ouverture. Il est donc utile, au niveau de cette ouverture, d'assurer un référencement systématique des éléments 2 contre une surface de guidage différente de celle où est pratiquée l'ouverture d'éjection.

Différentes façons de réaliser le référencement ou l'action mécanique sont possibles.

Par exemple, comme le montre la figure 3, il est possible d'utiliser la répartition des masses d'un élément 2 pour assurer sa position. Il est ainsi possible d'aménager un tronçon 13 vrillé pour que l'élément 2 se positionne, sous l'effet de la pesanteur, avec son fond fermé plan contre la surface de référence 12. Le tronçon 13 présente alors tout simplement un passage 14 en vis-à-vis de la surface de référence 12.

Le moyen d'éjection 9 peut alors comprendre une butée escamotable, pilotée par l'unité de contrôle et qui vient pousser l'élément 2 défectueux à travers le passage 14, lorsque cela est nécessaire.

La figure 5 montre une autre réalisation possible. En aval de la roue de transfert 11, le convoyeur 5 évolue de façon centrée par rapport aux surfaces de guidage des éléments 2. Il exerce ainsi un effort mécanique d'entraînement qui est essentiellement aligné avec le centre de gravité de l'élément 2. Cela a pour effet de laisser l'élément 2 se positionner alternativement contre l'une ou l'autre surface de guidage s'étendant parallèlement au convoyeur 5. Il est alors possible de prévoir qu'au niveau d'un tronçon 13, le convoyeur 5 n'évolue plus de façon centrée entre les deux surfaces de guidage en vis-à-vis l'une de l'autre. Le convoyeur 5 a alors un effort mécanique d'entraînement sur l'élément 2 qui est volontairement décalé de son centre de gravité. L'élément 2 vient alors se positionner systématiquement contre la surface de guidage la plus éloignée du convoyeur 5, qui devient alors surface de référence 12. Le canal de guidage au sein du tronçon 13 forme donc une sorte de chicane qui pousse les éléments 2 contre l'une des deux surfaces en vis-à-vis. Il suffit alors d'aménager le passage 14 en face de la surface de référence 12.

Le moyen d'éjection 9 comprend alors un actionneur au bout duquel se trouve un butée guide qui change la direction de guidage des éléments 2 et les pousse à travers le passage 14.

Comme il a déjà été souligné, le passage 14 peut être une embouchure d'entrée d'un retour vers la trémie 17 d'alimentation ou bien d'une évacuation définitive.

Grâce à l'invention, il est ainsi possible d'obtenir un dispositif de fourniture 1 qui est compact et fiable, dont les parties susceptibles de nécessiter des interventions sont faciles d'accès, dont le débit est significativement élevé, et où le risque de fournir des éléments de bouchage non conformes est réduit à son minimum.

## Revendications

1. Dispositif de fourniture (1) d'éléments (2) triés, du type capsule, bouchon, ou autres, pour alimenter un poste de travail en aval, ledit dispositif comprenant un moyen d'élévation (3) d'éléments (2) dans lequel s'effectue un premier tri, ainsi que, monté en aval, un moyen de traitement (4) des éléments (2), pour traiter lesdits éléments (2) un par un, et une chute de sortie (6), entre la sortie du moyen d'élévation (3) et le moyen de traitement (4), dans laquelle les éléments tombent par gravité et peuvent s'accumuler en vrac, dispositif de fourniture (1) **caractérisé en ce qu'**il comprend :
- un convoyeur (5), monté en aval du moyen de traitement (4) pour diriger les éléments (2) vers le poste de travail, ledit convoyeur (5) déplaçant les éléments (2) référencés à l'unité c'est-à-dire que chaque élément (2) est déplacé séparément et que la position de chaque élément (2) est connue et maîtrisée, ledit moyen de traitement (4) saisissant chaque élément (2) séparément pour les amener au convoyeur (5) ;
- un moyen d'analyse visuelle (8) pour contrôler l'aspect des éléments (2) alors qu'ils sont transportés par le convoyeur (5) en aval du moyen de traitement (4) ; et
- au moins un moyen d'éjection (9), agissant en aval du moyen d'analyse visuelle (8), pour dégager les éléments (2) détectés comme étant non conformes.

2. Dispositif de fourniture (1) selon la revendication 1, **caractérisé en ce que**
il comprend, en outre, une unité de contrôle, recevant le signal du moyen d'analyse visuelle (9) ainsi qu'un signal représentant l'avancement du convoyeur (5), et pilotant la manœuvre du au moins un moyen d'éjection (9).

3. Dispositif de fourniture (1) selon la revendication 1 ou 2, où
le moyen de traitement (4) comprend une roue de transfert (11) motrice, entraînant un à un les éléments (2) à sa périphérie.

4. Dispositif de fourniture (1) selon la revendication 3, où
le convoyeur (5) et la roue de transfert (11) travaillent de façon synchronisée pour permettre à chaque élément (2) séparément de passer de la roue de transfert (11) au convoyeur (5).

5. Dispositif de fourniture (1) selon l'une quelconque des revendications 1 à 4, **caractérisé en ce que**
il comprend un moyen de référencement assurant le placement des éléments (2) contre une surface de référence (12) pendant leur convoyage par le convoyeur (5) au sein d'un tronçon (13) prédéfini du dispositif de fourniture (1), ledit tronçon (13) présentant une partie ouverte sans guidage formant passage (14) en vis-à-vis de la surface de référence (12), le moyen d'éjection (9) agissant de sorte à diriger les éléments (2) vers cette partie ouverte pour les dégager du convoyeur (5).

6. Dispositif de fourniture (1) selon la revendication 5, où
le moyen de référencement consiste essentiellement en un canal (10) de guidage des éléments (2) qui est vrillé de sorte à assurer que, sous l'effet de la pesanteur, chaque élément (2) vient se plaquer et circuler contre un fond dudit canal (10) qui forme alors la surface de référence (12).

7. Dispositif de fourniture (1) selon la revendication 5, où
le moyen de référencement consiste essentiellement en un canal (10) de guidage des éléments (2) qui est désaxé par rapport à la direction du convoyeur (5), de sorte que le convoyeur (5) exerce sur l'élément (2) une force qui ne passe pas par son centre de gravité et qui a ainsi pour effet de le pousser latéralement vers une des surfaces latérales dudit canal (10) qui forme alors la surface de référence (12).

8. Procédé de fourniture d'éléments (2) de bouchage d'un contenant pour liquide du type bouteille ou autres, pour alimenter un poste de travail en aval, comprenant une succession d'étapes consistant essentiellement à
Effectuer une première sélection d'éléments (2) au sein d'un moyen d'élévation (3),
Amener les éléments (2) en colonne unifilaire vers un moyen de traitement (4),
Traiter les éléments (2) à l'unité au sein du moyen de traitement (4),
procédé **caractérisé en ce qu'**il comprend, en outre, suite au traitement à l'unité, une étape de convoyage de sortie vers le poste de travail en aval, au cours de laquelle chaque élément (2) est entraîné séparément et la position de chaque élément (2) est connue et maîtrisée ; et **en ce qu'**il comprend des étapes consistant à :
Effectuer un contrôle d'aspect de chaque élément (2) au cours du convoyage de sortie et
Dégager automatiquement les éléments (2) qui sont détectés comme non conformes sur la base du contrôle d'aspect.

9. Procédé selon la revendication 8, où l'étape de contrôle d'aspect de chaque élément (2) au cours du convoyage de sortie est effectuée grâce à une caméra fixe dans le champ de vision de laquelle les éléments (2) viennent à circuler.

10. Procédé selon la revendication 8, où
effectuer un contrôle d'aspect comprend vérifier la position de l'élément (2) de sorte à pouvoir détecter une mauvaise orientation, et/ou vérifier ses dimensions, de sorte à pouvoir détecter l'absence d'une collerette, par exemple, et/ou vérifier que l'élément (2) est complet, de sorte à pouvoir détecter des manques de matière au sein de l'élément (2), par exemple.

11. Procédé selon l'une quelconque des revendications 8 à 10, où
amener les éléments (2) en colonne unifilaire se fait en laissant agir la pesanteur, les éléments (2) circulant au sein d'une chute de sortie (6) aboutissant sur un moyen de traitement (4) des éléments (2) à l'unité, et au sein de laquelle ils s'accumulent.

12. Procédé selon l'une quelconque des revendications 8 à 11, où
traiter les éléments (2) à l'unité consiste essentiellement à les saisir chacun séparément depuis la chute de sortie (6) pour les amener dans la chute montante (7), et/ou à en modifier l'orientation, et/ou à dégager les éléments (2) non conformes.

## Patentansprüche

1. Vorrichtung zur Bereitstellung (1) sortierter Elemente (2) vom Typ Kappe, Stopfen oder anderer zur Versorgung eines stromabwärtigen Arbeitsplatzes, wobei die Vorrichtung ein Mittel zum Anheben (3) von Elementen (2) umfasst, in dem eine erste Sortierung erfolgt, sowie ein stromab angebrachtes Mittel zur Behandlung (4) der Elemente (2), um die Elemente (2) einzeln zu behandeln, und eine Ausgabeschütte (6) zwischen der Ausgabe des Hebemittels (3) und dem Behandlungsmittel (4), in welche die Elemente durch Schwerkraft fallen und sich lose ansammeln können, wobei die Bereitstellungsvorrichtung (1) **dadurch gekennzeichnet ist, dass** sie Folgendes umfasst:
- einen Förderer (5), der stromab des Behandlungsmittels (4) montiert ist, um die Elemente (2) zum Arbeitsplatz zu leiten, wobei der Förderer (5) die erfassten Elemente (2) einzeln bewegt, das heißt, dass jedes Element (2) getrennt bewegt wird und die Position jedes Elements (2) bekannt und beherrscht ist, wobei das Behandlungsmittel (4) jedes Element (2) getrennt greift, um sie dem Förderer (5) zuzuführen;
- ein Mittel zur visuellen Analyse (8) zur Kontrolle des Erscheinungsbilds der Elemente (2), während sie vom Förderer (5) stromab des Behandlungsmittels (4) transportiert werden; und
- wenigstens ein Auswurfmittel (9), das stromab des Mittels zur visuellen Analyse (8) wirkt, um die als nicht in Ordnung erkannten Elemente (2) wegzuräumen.

2. Bereitstellungsvorrichtung (1) nach Anspruch 1, **dadurch gekennzeichnet, dass**
sie ferner eine Steuereinheit umfasst, die das Signal des Mittels zur visuellen Analyse (9) sowie ein Signal, das den Vorschub des Förderers (5) repräsentiert, empfängt, und die Betätigung des wenigstens einen Auswurfmittels (9) steuert.

3. Bereitstellungsvorrichtung (1) nach Anspruch 1 oder 2, wobei
das Behandlungsmittel (4) ein angetriebenes Übergaberad (11) umfasst, das die Elemente (2) an seinem Umfang einzeln mitnimmt.

4. Bereitstellungsvorrichtung (1) nach Anspruch 3, wobei
der Förderer (5) und das Übergaberad (11) synchron arbeiten, um es jedem Element (2) getrennt zu ermöglichen, vom Übergaberad (11) zum Förderer (5) zu gelangen.

5. Bereitstellungsvorrichtung (1) nach einem der Ansprüche 1 bis 4, **dadurch gekennzeichnet, dass**
sie ein Erfassungsmittel umfasst, das die Platzierung der Elemente (2) an einer Referenzfläche (12) während ihrer Förderung durch den Förderer (5) innerhalb eines vorgegebenen Teilstücks (13) der Bereitstellungsvorrichtung (1) gewährleistet, wobei das Teilstück (13) einen offenen Abschnitt ohne Führung, der einen Durchlass (14) bildet, gegenüber der Referenzfläche (12) aufweist, wobei das Auswurfmittel (9) so wirkt, dass die Elemente (2) zu diesem offenen Abschnitt geleitet werden, um sie vom Förderer (5) wegzuräumen.

6. Bereitstellungsvorrichtung (1) nach Anspruch 5, wobei
das Erfassungsmittel im Wesentlichen aus einem Kanal (10) zur Führung der Elemente (2) besteht, der so verdreht ist, dass gewährleistet wird, dass unter der Wirkung der Schwerkraft jedes Element (2) an einen Boden des Kanals (10) gedrückt und bewegt wird, der dann die Referenzfläche (12) bildet.

7. Bereitstellungsvorrichtung (1) nach Anspruch 5, wobei
das Erfassungsmittel im Wesentlichen aus einem Kanal (10) zur Führung der Elemente (2) besteht, der im Verhältnis zur Richtung des Förderers (5) achsenversetzt ist, so dass der Förderer (5) auf das Element (2) eine Kraft ausübt, die nicht durch dessen Schwerpunkt verläuft und somit bewirkt, dass es seitlich zu einer der Seitenflächen des Kanals (10) gedrückt wird, die dann die Referenzfläche (12) bildet.

8. Verfahren zur Bereitstellung von Elementen (2) zum Verschließen eines Flüssigkeitsbehälters vom Typ Flasche oder anderer zur Versorgung eines stromabwärtigen Arbeitsplatzes, umfassend eine Aufeinanderfolge von Schritten, im Wesentlichen bestehend aus Durchführen einer ersten Auswahl von Elementen (2) innerhalb eines Hebemittels (3),
Zuführen der Elemente (2) zu einem Behandlungsmittel (4) in einer einreihigen Kolonne,
Behandeln der Elemente (2) einzeln innerhalb des Behandlungsmittels (4),
wobei das Verfahren **dadurch gekennzeichnet ist, dass** es ferner nach dem einzelnen Behandeln einen Schritt des Ausgabeförderns zum stromabwärtigen Arbeitsplatz umfasst, in dessen Verlauf jedes Element (2) getrennt mitgenommen wird und die Position jedes Elements (2) bekannt und beherrscht ist; und dadurch, dass es Schritte umfasst, die aus Folgendem bestehen:
Durchführen einer Kontrolle des Erscheinungsbilds jedes Elements (2) im Verlauf des Ausgabeförderns, und
Automatisches Wegräumen der Elemente (2), die auf der Grundlage der Erscheinungsbildkontrolle als nicht in Ordnung erkannt werden.

9. Verfahren nach Anspruch 8, wobei der Schritt des Kontrollierens des Erscheinungsbilds jedes Elements (2) im Verlauf des Ausgabeförderns mithilfe einer festen Kamera durchgeführt wird, in deren Sichtfeld sich die Elemente (2) bewegen.

10. Verfahren gemäß Anspruch 8, wobei
Durchführen einer Erscheinungsbildkontrolle Überprüfen der Position des Elements (2) zur Erkennung einer falschen Ausrichtung und/oder Überprüfen seiner Abmessungen zur Erkennung des Fehlens zum Beispiel eines Kragens und/oder Überprüfen der Vollständigkeit des Elements (2) zum Beispiel zur Erkennung von fehlendem Material innerhalb des Elements (2) umfasst.

11. Verfahren nach einem der Ansprüche 8 bis 10, wobei Zuführen der Elemente (2) in einer einreihigen Kolonne durch die Wirkung der Schwerkraft erfolgt, wobei sich die Elemente (2) innerhalb einer Ausgabeschütte (6) bewegen, die an einem Mittel zur einzelnen Behandlung (4) der Elemente (2) mündet und innerhalb derer sie sich ansammeln.

12. Verfahren nach einem der Ansprüche 8 bis 11, wobei einzelnes Behandeln der Elemente (2) im Wesentlichen darin besteht, sie jeweils getrennt aus der Ausgabeschütte (6) zu greifen, um sie der Steigrinne (7) zuzuführen und/oder deren Ausrichtung zu ändern und/oder Elemente (2), die nicht in Ordnung sind, wegzuräumen.

## Claims

1. Device (1) for supplying sorted elements (2), of the cap, stopper type, or the like, for feeding a downstream work station, said device comprising a means (3) for lifting elements (2) in which a first sorting operation is carried out, and, mounted downstream, a means (4) for processing the elements (2), for processing said elements (2) one by one, and an outlet chute (6), between the outlet of the lifting means (3) and the processing means (4), in which the elements fall by gravity and can accumulate in bulk, the supply device (1) being **characterized in that** it comprises:
- a conveyor (5), mounted downstream of the processing means (4), for directing the elements (2) towards the work station, said conveyor (5) moving the elements (2) in an individually referenced manner, meaning that each element (2) is moved separately and the position of each element (2) is known and controlled, said processing means (4) taking each element (2) separately for feeding them to the conveyor (5);
- a visual analysis means (8) for checking the appearance of the elements (2) while they are being transported by the conveyor (5) downstream of the processing means (4); and
- an ejection means (9), acting downstream of the visual analysis means (8), for removing the elements (2) that have been detected as being non-compliant.

2. Supply device (1) according to Claim 1, **characterized in that**
it also comprises a control unit that receives the signal from the visual analysis means (9) and a signal representing the forward movement of the conveyor (5), and controls the operation of the at least one ejection means (9).

3. Supply device (1) according to Claim 1 or 2, wherein
the processing means (4) comprises a driving transfer wheel (11), which drives the elements (2) one by one at its periphery.

4. Supply device (1) according to Claim 3, wherein
the conveyor (5) and the transfer wheel (11) work synchronously so as to allow each element (2) to pass separately from the transfer wheel (11) to the conveyor (5) .

5. Supply device (1) according to any one of Claims 1 to 4, **characterized in that**
it comprises a referencing means for the placement of the elements (2) against a reference surface (12) while they are being conveyed by the conveyor (5) which a predefined section (13) of the supply device (1), said section (13) having an open part without guidance forming a passage (14) opposite the reference surface (12), the ejection means (9) acting so as to direct the elements (2) towards this open part to remove them from the conveyor (5).

6. Supply device (1) according to Claim 5, wherein
the referencing means consists substantially of a channel (10) for guiding the elements (2) which is twisted so as to ensure that, under the effect of gravity, each element (2) is pressed against and circulates in contact with a bottom of said channel (10), which then forms the reference surface (12).

7. Supply device (1) according to Claim 5, wherein
the referencing means consists substantially of a channel (10) for guiding the elements (2) which is off-centre with respect to the direction of the conveyor (5), such that the conveyor (5) exerts on the element (2) a force which does not pass through its centre of gravity and which thus has the effect of pushing it laterally towards one of the lateral surfaces of said channel (10), which then forms the reference surface (12).

8. Method for supplying elements (2) for stoppering a container for liquid of the bottle type, or the like, for supplying a downstream work station, comprising a succession of steps consisting substantially in
performing a first selection of elements (2) within a lifting means (3),
conveying the elements (2) in a single-file column towards a processing means (4),
processing the elements (2) individually within the processing means (4),
the method being **characterized in that** it also comprises, following the individual processing, a step of outward conveying towards the downstream work station, during which each element (2) is driven separately and the position of each element (2) is known and controlled; and **in that** it comprises steps of:
checking the appearance of each element (2) during the outward conveying and
automatically removing the elements (2) that are detected as being non-compliant on the basis of the appearance check.

9. Method according to Claim 8, wherein the step of checking the appearance of each element (2) during outward conveying is carried out by way of a fixed camera, in the field of view of which the elements (2) circulate.

10. Method according to Claim 8, wherein
carrying out an appearance check comprises verifying the position of the element (2) so that it is possible to detect an incorrect orientation, and/or verifying its dimensions so that it is possible to detect the absence of a collar, for example, and/or verifying that the element (2) is complete so that it is possible to detect missing material within the element (2), for example.

11. Method according to any one of Claims 8 to 10, wherein
the elements (2) are conveyed in a single-file column under the action of gravity, the elements (2) circulating within an outlet chute (6) leading to a means (4) for processing the elements (2) individually, and within which they accumulate.

12. Method according to any one of Claims 8 to 11, wherein
processing the elements (2) individually consists substantially in taking each one separately from the outlet chute (6) in order to convey them in the upward chute (7), and/or modifying the orientation thereof, and/or removing non-compliant elements (2).
